(19) Europäisches Patentamt
European Patent Office
Office européen des brevets

(11) **EP 3 328 663 B1**

(12) **FASCICULE DE BREVET EUROPEEN**

(45) Date de publication et mention
de la délivrance du brevet:
**26.06.2024 Bulletin 2024/26**

(21) Numéro de dépôt: **16744739.0**

(22) Date de dépôt: **27.07.2016**

(51) Classification Internationale des Brevets (IPC):
**B60C 1/00** *(2006.01)*   **C08L 7/00** *(2006.01)*
**C08L 9/00** *(2006.01)*   **C08L 15/00** *(2006.01)*

(52) Classification Coopérative des Brevets (CPC):
(C-Sets disponibles)
**B60C 1/0016; C08K 3/04; C08K 3/06; C08K 3/22;
C08K 5/09; C08K 5/18; C08K 5/47; C08L 7/00;
C08L 9/00; C08L 15/00;** B60C 2200/02    (Cont.)

(86) Numéro de dépôt international:
**PCT/EP2016/067864**

(87) Numéro de publication internationale:
**WO 2017/017123 (02.02.2017 Gazette 2017/05)**

(54) **PNEUMATIQUE D'AVION**

FLUGZEUGREIFEN

AIRCRAFT TYRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2015 FR 1557239**

(43) Date de publication de la demande:
**06.06.2018 Bulletin 2018/23**

(73) Titulaire: **Compagnie Générale des
Etablissements Michelin
63000 Clermont-Ferrand (FR)**

(72) Inventeur: **MANGERET, Jean-Luc
63040 Clermont Ferrand Cedex 9 (FR)**

(74) Mandataire: **M.F.P. Michelin
DCJ/PI - F35 - Ladoux
23 place des Carmes-Déchaux
63040 Clermont-Ferrand Cedex 9 (FR)**

(56) Documents cités:
**EP-A1- 1 184 412     EP-A1- 2 532 536
EP-A1- 2 532 536     WO-A1-2013/068270**

FR-A1- 2 980 206     JP-A- 2001 261 887
JP-A- 2004 256 611     JP-A- 2006 152 214

Remarques:
Le dossier contient des informations techniques
présentées postérieurement au dépôt de la demande
et ne figurant pas dans le présent fascicule.

(52) Classification Coopérative des Brevets (CPC):
(Cont.)

C-Sets
**C08L 7/00, C08L 15/00, C08K 3/04, C08K 3/22,
C08K 5/09, C08K 3/06, C08K 5/18, C08K 5/47;
C08L 9/00, C08L 7/00, C08L 15/00, C08K 3/04,
C08K 3/22, C08K 5/09, C08K 3/06, C08K 5/18,
C08K 5/47;
C08L 15/00, C08L 7/00, C08K 3/04, C08K 3/22,
C08K 5/09, C08K 3/06, C08K 5/18, C08K 5/47;
C08L 15/00, C08L 7/00, C08L 9/00, C08K 3/04,**

**C08K 3/22, C08K 5/09, C08K 3/06, C08K 5/18,
C08K 5/47**

**Description**

**Domaine technique**

La présente invention est relative aux pneumatiques destinés à équiper des avions et présentant une résistance à l'usure améliorée, notamment lors de la phase d'atterrissage.

**Etat de la technique**

De manière connue, un pneumatique d'avion doit résister à des conditions de pression, de charge et de vitesse élevées. De plus il doit satisfaire également des exigences de résistance à l'usure et d'endurance. Par endurance, on entend l'aptitude du pneumatique à résister au cours du temps aux sollicitations cycliques auxquelles il est soumis. Lorsque la bande de roulement d'un pneumatique d'avion est usée, ce qui marque la fin d'une première vie d'utilisation, le pneumatique est rechapé, c'est-à-dire que la bande de roulement usée est remplacée par une nouvelle bande de roulement pour permettre une deuxième vie d'utilisation. Une résistance à l'usure améliorée permet d'effectuer un plus grand nombre d'atterrissages par vie d'utilisation. Une endurance améliorée permet d'augmenter le nombre de vies d'utilisation d'un même pneumatique.

Il est connu d'utiliser dans les bandes de roulement de pneumatique d'avion, des compositions de caoutchouc à base de caoutchouc naturel et de noir de carbone, ces deux éléments principaux permettant d'obtenir des compositions possédant des propriétés compatibles avec les conditions d'usage d'un pneumatique d'avion. En plus de ces éléments principaux, ces compositions comprennent les additifs usuels de ce type de compositions tels qu'un système de vulcanisation et des agents de protections.

De telles compositions de bande de roulement de pneumatique d'avion sont utilisées depuis de nombreuses années et présentent des propriétés mécaniques leur permettant de résister aux conditions d'usure très particulières des pneumatiques d'avion. En effet ces pneumatiques sont soumis à de très grandes variations de température et de vitesse, en particulier à l'atterrissage où ils doivent passer d'une vitesse nulle à une très grande vitesse, provoquant un échauffement et une usure considérables. Ces conditions d'usure particulières ne concernent pas d'autres types de pneumatiques tels que les pneumatiques de véhicules de tourisme, poids lourds, génie civil ou hors sol.

Usuellement, les compositions de bande de roulement de pneumatiques d'avion comprennent exclusivement du caoutchouc naturel, ce dernier permettant de garantir un équilibre optimal entre la résistance à l'usure et la stabilité thermique du pneumatique.

Or, il est toujours intéressant pour les industriels des pneumatiques d'avion de trouver des solutions plus performantes et plus résistantes, notamment plus résistantes aux conditions extrêmes et spécifiques d'usure engendrée à l'atterrissage des avions. Une étude (S. K. Clark « Touchdown dynamics v, Précision Measurement Company, Ann Arbor, MI, NASA, Langley Research Center, Computational Modeling of Tires pages 9-19 publié en août 1995) a décrit les sollicitations auxquelles sont soumis les pneumatiques d'avion à l'atterrissage et proposé une méthode d'évaluation des performances des pneumatiques d'avion lors de ces sollicitations. JP2004256611 se rapporte à un pneumatique radial pour un avion, qui présente une faible propriété exothermique, une résistance élevée à la rupture et une bonne résistance à l'abrasion.

Il existe donc un réel besoin de fournir des pneumatiques d'avion présentant une meilleure résistance à l'usure, notamment celle engendrée lors des atterrissages, tout en maintenant de bonnes propriétés mécaniques et thermiques des pneumatiques.

**Exposé de l'invention**

Lors de leurs recherches, les Demanderesses ont trouvé que des compositions particulières des bandes de roulement de pneumatique d'avion pouvaient améliorer les propriétés des pneumatiques d'avion, en particulier pour la phase d'atterrissage de ces pneumatiques, tout en maintenant de bonnes propriétés mécaniques et thermiques des pneumatiques.

En conséquence, l'invention concerne notamment un pneumatique d'avion dont la bande de roulement comprend une composition à base d'au moins une charge renforçante, un système de réticulation et d'une matrice élastomérique comprenant :

- de 15 à 75 parties pour cent parties d'élastomère, pce, d'élastomère isoprénique, et
- de 25 à 85 pce d'un copolymère butadiénique et styrénique fonctionnalisé à l'étain,

le taux total d'élastomère isoprénique et de copolymère butadiénique et styrénique fonctionnalisé à l'étain étant compris dans un domaine allant de 45 à 100 pce.

Elle concerne également l'utilisation d'une composition décrite dans la présente dans une bande de roulement de pneumatique d'avion pour améliorer la résistance à l'usure dudit pneumatique, notamment celle engendrée lors des atterrissages. Est également décrit, l'utilisation d'un pneumatique selon l'invention pour améliorer la résistance à l'usure dudit pneumatique, notamment celle engendrée lors des atterrissages.

Définitions

Par l'expression « partie en poids pour cent parties en poids d'élastomère » (ou pce), il faut entendre au sens de la présente invention, la part, en masse pour cent parties d'élastomère ou de caoutchouc.

Dans la présente, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente, par l'expression "comprend majoritairement", on entend comprend plus de 50%. Il peut s'agir par exemple de plus de 60%, 70%, 80%, 90%, voire 100%. Sauf indication contraire, les pourcentages sont exprimés en pourcentage en poids.

Sauf indications contraires, les composants décrits dans la présente font partie de la composition de la bande de roulement du pneumatique d'avion selon la présente invention. Leurs taux d'incorporation respectifs correspondent à leurs taux dans la composition de bande de roulement du pneumatique d'avion selon la présente invention.

Matrice élastomérique

Selon l'invention, la matrice élastomérique comprend

- de 15 à 75 pce d'élastomère isoprénique, et
- de 25 à 85 pce d'un copolymère butadiénique et styrénique fonctionnalisé à l'étain,

le taux total d'élastomère isoprénique et de copolymère butadiénique et styrénique fonctionnalisé à l'étain étant compris dans un domaine allant de 45 à 100 pce.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse, de préférence du caoutchouc naturel. Par exemple, le polyisoprène de synthèse, peut être un polyisoprène ayant un taux (% molaire) de liaisons cis-1,4 supérieur à 90%, plus préférentiellement encore supérieur à 98%.

Les élastomères utilisés dans le cadre de la présente invention peuvent être par exemple à blocs, statistiques, séquencés, microséquencés, et être préparés en dispersion ou en solution ; ils peuvent être couplés et/ou étoilés et/ou fonctionnalisés avec un agent de couplage et/ou d'étoilage et/ou de fonctionnalisation.

De préférence, selon l'invention, le taux d'élastomère isoprénique peut être compris dans un domaine allant de 20 à 70 pce, par exemple de 20 à 65 ou de 30 à 65 pce, par exemple de 25 à 60 pce, par exemple de 25 à 50 pce.

L'élastomère isoprénique peut être choisi dans le groupe comprenant le caoutchouc naturel, le polyisoprène synthétique et leur mélange. De préférence, l'élastomère isoprénique est du caoutchouc naturel.

Au sens de la présente invention on appelle copolymère d'unité butadiéniques et d'unités styréniques tout copolymère obtenu par copolymérisation d'un ou plusieurs butadiène(s) avec un ou plusieurs composés styréniques. A titre de composés styréniques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

Le copolymère butadiénique et styrénique fonctionnalisé à l'étain (Sn), c'est-à-dire comportant des liaisons C-Sn (appelée aussi fonctionnalisation Sn), peut être fonctionnalisé simplement (liaisons C-Sn en bout de chaîne) et/ou couplé (atome Sn entre deux chaînes) et/ou étoilé (atome Sn entre 3 chaines ou plus) avec un agent de fonctionnalisation et/ou de couplage et/ou d'étoilage. De manière générique on parle pour rassembler tous ces élastomères liés à de l'étain, d'élastomères fonctionnalisés à l'étain. Ces élastomères sont connus de l'homme du métier, par exemple ceux décrits dans le document WO 2011/042507.

D'autres types de fonctionnalisation existent pour les copolymères styréniques et butadièniques, tels que des groupes fonctionnels silanol ou polysiloxane ayant une extrémité silanol, ou bien les copolymères styréniques et butadièniques époxydés. De telles fonctionnalisations sont possibles dans le cadre de la présente invention en plus de celle à l'étain.

L'homme du métier connait bien les agents de fonctionnalisation et/ou de couplage et/ou d'étoilage utilisable dans le cadre de la présente invention. A titre d'exemple d'agent de fonctionnalisation, on peut citer les agents de fonctionnalisation dérivés de l'étain pouvant répondre à la formule générale $(X^1_1R^1_2Sn)$-O-$(SnR^1_{3-y}X^1_y)$ ou $(X^1_1R^1_2Sn)$-O-$(CH2)_n$-O-$(SnR^1_{3-y}X^1_y)$, où y représente un entier de valeur 0 ou 1, $R^1$ représente un radical alkyle, cycloalkyle, aryle, alkaryle ou vinyle ayant de 1 à 12 atomes de carbone, de préférence un butyle, $X^1$ est un atome d'halogène, de préférence le chlore, et n représente un entier de 1 à 20, de préférence 4. Par ailleurs, à titre d'agents de couplage ou d'étoilage à l'étain, on peut citer les dérivés de l'étain de formule $SnRxX_4$-x, x représentant un nombre entier de valeur 0 à 2, R représentant un radical alkyle, cycloalkyle, aryle, alkaryle, aralkyle, vinyle ayant de 1 à 10 atomes de carbone, de préférence un radical alkyle ayant de 1 à 4 atomes de carbone, et X est un atome d'halogène, de préférence le chlore. A titre de dérivés de l'étain préférentiels, on peut citer le dichlorure de dibutyl étain ou encore tétrachlorure d'étain, ce dernier étant tout particulièrement préféré.

Le copolymère butadiénique et styrénique fonctionnalisé à l'étain, peut être obtenu de manière connue en soi par réaction d'un dérivé de l'étain sur le copolymère butadiénique et styrénique. La préparation d'un élastomère diénique étoilé est par exemple décrit dans le brevet US 3,393,182.

Le copolymère butadiénique et styrénique fonctionnalisé à l'étain est préférentiellement un copolymère statistique de butadiène-styrène (SBR). On parlera alors de SBR fonctionnalisé à l'étain (Sn-SBR). Il peut s'agir par exemple d'un SBR préparé en émulsion ("ESBR") ou d'un SBR préparé en solution ("SSBR"). Les teneurs en liaisons vinyliques (-1,2), trans-1,4 et cis-1,4 de la partie butadiénique du SBR peuvent être variables. Par exemple, la teneur en vinyle peut être comprise entre 15% et 80% (% molaire), la teneur en liaisons trans-1,4 comprise entre 15% et 80% (% molaire).

De préférence, selon l'invention, le taux de copolymère butadiénique et styrénique fonctionnalisé à l'étain est compris dans un domaine allant de 30 à 80 pce, par exemple de 35 à 80 pce, par exemple de 40 à 75 pce, par exemple de 50 à 75 pce.

Le copolymère butadiénique et styrénique fonctionnalisé à l'étain est un copolymère butadiénique et styrénique fonctionnalisé à l'étain à faible taux de styrène. Le taux de styrène du copolymère butadiénique et fonctionnalisé à l'étain styrénique à faible taux de styrène est compris dans un domaine allant de 10 à 19%.

Dans un mode de réalisation particulier de la présente invention, le taux total d'élastomère isoprénique et de copolymère butadiénique et styrénique fonctionnalisé à l'étain peut être de 100 pce. En d'autres termes, selon ce mode de réalisation, la matrice élastomérique de la composition de la bande de roulement du pneumatique d'avion selon l'invention comprend exclusivement de l'élastomère isoprénique et du copolymère butadiénique et styrénique fonctionnalisé à l'étain.

Dans la matrice élastomérique comprise dans la bande de roulement du pneumatique d'avion selon l'invention, le taux total d'élastomère isoprénique et de copolymère butadiénique et styrénique fonctionnalisé à l'étain est compris dans un domaine allant de 45 à moins de 100 pce. En d'autres termes, la matrice élastomérique de la composition de la bande de roulement du pneumatique d'avion selon l'invention comprend de plus de 0 à 55 pce d'un autre élastomère diénique en plus de l'élastomère isoprénique et du copolymère butadiénique et styrénique fonctionnalisé à l'étain. Le taux total d'élastomère isoprénique et de copolymère butadiénique et styrénique fonctionnalisé à l'étain peut être, par exemple, compris dans domaine allant de 50 à moins de 100 pce, de préférence de 45 à 90 pce, de préférence de 70 à 80 pce. Par "autre élastomère diénique", on entend un élastomère diénique différent d'élastomère isoprénique et de copolymère butadiénique et styrénique fonctionnalisé à l'étain.

Par élastomère "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques sont bien connus de l'homme de l'art et on entend plus particulièrement par élastomère diénique susceptible d'être utilisé dans les compositions :

- tout homopolymère obtenu par polymérisation d'un monomère diène conjugué ayant de 4 à 12 atomes de carbone ;
- tout copolymère obtenu par copolymérisation d'un ou plusieurs diènes conjugués entre eux ou avec un ou plusieurs composés vinyle aromatique ayant de 8 à 20 atomes de carbone ;

- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
- un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

De préférence, selon ce mode de réalisation de l'invention, l'autre élastomère diénique peut être choisi dans le groupe comprenant ou constitué par des copolymères butadiéniques et styréniques non-fonctionnalisés à l'étain, des polybutadiènes et le mélange d'au moins deux, par exemple 2, 3, 4, 5, voire plus, de ces élastomères diéniques.

Le copolymère butadiénique et styrénique non-fonctionnalisé à l'étain peut être, par exemple, du copolymère butadiène-styrène (SBR). Il peut s'agir par exemple d'un SBR préparé en émulsion ("ESBR") ou d'un SBR préparé en solution ("SSBR"). Les teneurs en liaisons vinyliques (-1,2), trans-1,4 et cis-1,4 de la partie butadiénique du SBR peuvent être variables. Par exemple, la teneur en vinyle peut être comprise entre 15% et 80% (% molaire), la teneur en liaisons trans-1,4 comprise entre 15% et 80% (% molaire).

De préférence, selon ce mode de réalisation de l'invention, l'autre élastomère diénique comprend majoritairement un polybutadiène.

Préférentiellement, le polybutadiène peut être par exemple un polybutadiène comprenant majoritairement des liaisons cis-1,4. Il peut s'agir par exemple d'un polybutadiène composite comprenant 5 à 25% de polybutadiène 1,2 syndiotactique dans une matrice de polybutadiène cis-1,4, par exemple du « VCR412 UBEPOL » de la société UBE, comprenant 12% de polybutadiène 1,2 syndiotactique dans une matrice de polybutadiène 1,4 cis.

Le taux de l'autre élastomère diénique peut dépendre de la nature de cet autre élastomère diénique. Ce taux peut être compris dans un domaine allant de plus de 0 à 50 pce, de préférence de 10 à 55 pce, de préférence de 20 à 30 pce.

Lorsque l'autre élastomère diénique comprend majoritairement un polybutadiène comprenant majoritairement des liaisons cis-1,4, le taux d'élastomère diénique peut être compris dans un domaine allant de 10 à 30 pce, de préférence de 15 à 25 pce.

Lorsque l'autre élastomère diénique comprend majoritairement du polybutadiène composite comprenant 5 à 25% de polybutadiène 1,2 syndiotactique dans une matrice de polybutadiène cis-1,4, le taux de l'autre élastomère diénique est compris dans un domaine allant de 10 à 55 pce, de préférence de 30 à 55 pce, de préférence de 40 à 55 pce, de préférence de 45 à 50 pce.

Charge renforçante

La charge renforçante est connue pour ses capacités à renforcer une composition de caoutchouc utilisable pour la fabrication de pneumatiques.

Selon l'invention, la charge renforçante peut comprendre majoritairement, voire exclusivement, du noir de carbone. La charge renforçante peut également comprendre majoritairement, voire exclusivement, une charge inorganique renforçante.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le noir de carbone présente une surface spécifique BET de préférence d'au moins 90 m2/g, de manière plus préférentielle d'au moins 100 m2/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. Les noirs de carbone peuvent être utilisés à l'état isolé, tels que disponibles commercialement, ou sous tout autre forme, par exemple comme support de certains des additifs de caoutchouterie utilisés. La surface spécifique BET des noirs de carbone est mesurée selon la norme D6556-10 [méthode multipoints (au minimum 5 points) - gaz : azote - domaine de pression relative P/P0 : 0.1 à 0.3].

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 40 450 m2/g, de préférence de 30 à 400 m2/g, notamment entre 60 et 300 m2/g.

Dans le présent exposé, en ce qui concerne la silice, la surface spécifique BET est déterminée de manière connue par adsorption de gaz à l'aide de la méthode de Brunauer-Emmett-Teller décrite dans "*The Journal of the American Chemical Society*" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p/po* : 0.05 à 0.17). La surface spécifique CTAB est la surface externe déterminée selon la norme française NF T 45-007 de novembre 1987 (méthode B).

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

La teneur en agent de couplage est avantageusement inférieure à 12 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 9 pce, plus préférentiellement compris dans un domaine allant de 3 à 9 pce. Ce taux est aisément ajusté par l'homme du métier selon le taux de charge inorganique utilisé dans la composition.

Selon l'invention, le taux de charge renforçante peut être compris dans un domaine allant de 20 à 70 pce, de préférence de 25 à 55 pce, de préférence de 45 à 55 pce.

Système de réticulation

Le système de réticulation peut être à base soit de soufre, soit de donneurs de soufre et/ou de peroxyde et/ou de bismaléimides. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre peut être utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

Additifs divers

La composition de caoutchouc peut comporter également tout ou partie des additifs usuels habituellement utilisés dans les compositions d'élastomères destinées à constituer des bandes de roulement, comme par exemple des plastifiants, des pigments, des agents de protection tels que cires anti-ozone, anti-ozonants chimiques, anti-oxydants, des agents antifatigue.

Pneumatiques d'avion

La présente invention est relative à des pneumatiques destinés à équiper des avions. Les pneumatiques d'avion sont soumis à des contraintes bien spécifiques liées à leur utilisation et présentent certaines distinctions par rapport à d'autres types de pneumatiques tels que les pneumatiques de véhicules de tourisme, poids lourds, génie civil ou hors sol.

De façon générale, un pneumatique comprend une bande de roulement, destinée à venir en contact avec le sol par l'intermédiaire d'une surface de roulement, et reliée par l'intermédiaire de deux flancs à deux bourrelets, destinés à assurer une liaison mécanique entre le pneumatique et la jante sur laquelle il est monté.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique d'avion comprend généralement une pluralité de couches de carcasse s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille. Chaque couche de carcasse de la première et de la deuxième famille est constituée d'éléments de renforcement parallèles entre eux, faisant, avec la direction circonférentielle, un angle compris entre 80° et 100°.

Selon l'invention, le pneumatique peut comprendre un nombre de couches carcasse allant de 2 à 12, de préférence de 5 à 10.

Les éléments de renforcement des couches de carcasse sont le plus souvent des câbles constitués de filés de filaments textiles, préférentiellement en polyamide aliphatique ou en polyamide aromatique, et caractérisés par leurs propriétés mécaniques en extension. Les éléments de renforcement textiles subissent une traction sur une longueur initiale de 400 mm à une vitesse nominale de 200 mm/min. Tous les résultats sont une moyenne de 10 mesures.

En utilisation, un pneumatique d'avion est soumis à une combinaison de charge et de pression induisant un taux de flexion élevé, typiquement supérieur à 30% (par exemple à 32% ou 35%). Le taux de flexion d'un pneumatique est, par définition, sa déformation radiale, ou sa variation de hauteur radiale, lorsque celui-ci passe d'un état gonflé non chargé à un état gonflé chargé en statique, dans des conditions de pression et de charge telles que définies, par exemple, par la norme de la Tyre and Rim Association ou TRA. Il est défini par le rapport de la variation de la hauteur radiale du pneumatique sur la moitié de la différence entre le diamètre extérieur du pneumatique, mesuré en statique dans un état non chargé gonflé à la pression de référence, et le diamètre maximum de la jante, mesuré sur le rebord de jante. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge de référence.

Un pneumatique d'avion est par ailleurs soumis à une pression de gonflage élevée, typiquement supérieure à 9 bars. Ce niveau de pression élevé implique un nombre important de couches de carcasse, car l'armature de carcasse est dimensionnée pour assurer la résistance du pneumatique à ce niveau de pression avec un coefficient de sécurité élevé. A titre d'exemple, l'armature de carcasse d'un pneumatique dont la pression d'usage, telle que recommandée par la norme TRA, est égale à 15 bars, doit être dimensionnée pour résister à une pression égale à 60 bars, dans l'hypothèse d'un coefficient de sécurité égal à 4. Ainsi, selon l'invention, le pneumatique peut avoir une pression de gonflage supérieure à 9 bars, de préférence de 9 à 20 bars.

Les pneumatiques d'avion selon la présente invention peuvent être utilisés sur tout type d'avion. Ils sont particulièrement intéressants pour les avions utilisant des pneumatiques à grandes dimensions. En effet, plus la dimension d'un pneumatique d'avion est importante plus l'impact de l'usure à l'atterrissage sur l'usure globale du pneumatique sera important. Ainsi, selon l'invention, le pneumatique peut avoir une dimension supérieure à 18 pouces, de préférence de 20 à 23 pouces.

En utilisation, les sollicitations mécaniques de roulage induisent des cycles de flexion dans les bourrelets du pneumatique, qui s'enroulent sur les rebords de jante. Ces cycles de flexion génèrent en particulier, dans les portions de couches de carcasse situées dans la zone de flexion sur jante, des variations de courbure combinées avec des variations d'allongement des éléments de renforcement des couches de carcasse. Ces variations d'allongement ou déformations, en particulier dans les couches de carcasse les plus axialement extérieures, peuvent avoir des valeurs minimales négatives, correspondant à une mise en compression. Cette mise en compression est susceptible d'induire une rupture par fatigue des éléments de renforcement et donc une dégradation prématurée du pneumatique.

Ainsi, le pneumatique d'avion selon l'invention est préférentiellement un pneumatique d'avion qui est soumis lors de son utilisation à une combinaison de charge et de pression induisant un taux de flexion supérieur à 30.

De même, le pneumatique d'avion selon l'invention est préférentiellement un pneumatique d'avion comprenant en plus de la bande de roulement, une structure interne comprenant une pluralité de couches de carcasse s'étendant entre les deux bourrelets et réparties entre une première et une deuxième famille, la première famille étant constituée par des couches de carcasse, s'enroulant, dans chaque bourrelet, de l'intérieur vers l'extérieur du pneumatique et la deuxième famille étant constituée par des couches de carcasse s'étendant, dans chaque bourrelet, de l'extérieur vers l'intérieur du pneumatique.

## Préparation des compositions de caoutchouc

Les compositions utilisées dans les bandes de roulement de pneumatique d'avion de l'invention, peuvent être fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

La composition de la bande de roulement du pneumatique conforme à l'invention, peut être soit à l'état cru (avant réticulation ou vulcanisation), soit à l'état cuit (après réticulation ou vulcanisation), peut être un produit semi-fini qui peut être utilisé dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES

## I. Mesures et tests utilisés

### I.1 Essais de traction

Ces essais de traction permettent de déterminer les modules d'élasticité et les propriétés à la rupture et sont basées sur la norme NF ISO 37 de Décembre 2005 sur une éprouvette haltère de type 2. L'allongement rupture ainsi mesuré à 60°C est exprimé en % d'allongement.

### I.2 Perte de masse

Cet essai permet de déterminer la perte de masse d'un échantillon de composition de bande de roulement de pneumatique d'avion, lorsqu'il est soumis à un test d'abrasion sur un abrasimètre à haute vitesse.

Le test d'abrasion à haute vitesse est réalisé selon le principe décrit dans l'article de S. K. Clark « Touchdown dynamics v, Précision Measurement Company, Ann Arbor, MI, NASA, 35 Langley Research Center, Computational Modeling of Tires pages 9-19 publié en août 1995. Le matériau de bande de roulement frotte sur une surface telle qu'un disque Norton Vulcan A30S-BF42. La vitesse linéaire lors du contact est de 70 m/s avec une pression moyenne de contact de 15 à 20 bars. Une l'énergie de 10 à 20 MJ/m2 de surface de contact est mise en jeu durant l'expérience.

Les éléments du dispositif de tribométrie à énergie constante selon l'article de S.K. Clark mentionné ci-dessus sont un moteur, un embrayage, un plateau tournant et un porte échantillon.

Eléments du dispositif de tribométrie à énergie constante selon l'article de S.K. Clark mentionné ci-dessus :

- roulette (anneau torique en matériau de test monté sur une poulie à gorge)
- plateau tournant, par exemple constitué d'un disque Norton solidaire de l'axe d'un moteur électrique et d'un volant d'inertie

La performance est évaluée sur la base de la perte de masse selon la formule suivante :

$$[\text{Performance perte de masse} = \text{perte de masse témoin} / \text{perte de masse échantillon}]$$

Les résultats sont exprimés en base 100. Une performance pour l'échantillon supérieure à 100 est considérée comme meilleure que le témoin.

I.3 Propriétés dynamiques (après cuisson)

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, à 60°C selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte tan(δ). Pour le cycle retour, on indique la valeur maximale de tan(δ) observée (tan(δ)max), ainsi que l'écart de module complexe (G*) entre les valeurs à 0,1% et à 50% de déformation (effet Payne). Pour les valeurs de tan(δ)max à 60°C, plus la valeur est basse, plus la composition aura une hystérèse faible et donc un échauffement faible.

## II. Préparation des compositions et leurs propriétés à cuit

Les compositions C1 à C5, T1, T2 et T3 dont la formulation en pce figure dans les tableaux 1 et 2 ont été préparées de la manière suivante.
On introduit dans un mélangeur interne (taux de remplissage final : environ 70% en volume), dont la température initiale de cuve est d'environ 80°C, successivement les élastomères diéniques, les charges renforçantes, ainsi que les divers autres ingrédients a l'exception du système de vulcanisation. On conduit alors un travail thermomécanique (phase non productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfamide sur un mélangeur (homo-finisseur) à 70°C, en mélangeant le tout (phase productive) pendant un temps approprié (par exemple une dizaine de minutes).
Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement de pneumatique avion.

Exemple 1 :

Cet exemple a pour but de montrer l'influence du taux d'incorporation de SBR fonctionnalisé à l'étain dans des compositions de bande de roulement de pneumatiques d'avion sur le compromis de performance entre la résistance à l'usure et la conservation des propriétés mécaniques et thermiques.
T1, T2 et T3 sont des compositions témoins. T1 correspond à la composition d'une bande de roulement pour avion conventionnellement utilisée par l'homme du métier ; elle est à base de caoutchouc naturel comme seul élastomère. T2 correspond à une composition de bande de roulement dans laquelle le caoutchouc naturel a été remplacé par un SBR fonctionnel étain. T3 correspond à une composition de bande de roulement dans laquelle la moitié du caoutchouc naturel a été remplacé par un polybutadiène.
Les essais C1 à C3 sont conformes à l'invention. Les compositions C1 à C3 différent par les taux respectifs de caoutchouc naturel et de SBR étain.
Les résultats de performance de perte de masse et d'allongement rupture à 60°C sont exprimés en pourcentage base 100 par rapport à la composition témoin T1, correspondant aux compositions de bande de roulement usuelles.

Tableau 1

|  | T1 | C1 | C2 | C3 | T2 | T3 |
|---|---|---|---|---|---|---|
| NR (1) | 100 | 70 | 50 | 25 | - | 50 |
| SBR (2) | - | 30 | 50 | 75 | 100 | - |
| BR (3) | - | - | - | - | - | 50 |
| Noir de carbone (4) | 49 | 49 | 49 | 49 | 49 | 49 |
| Antioxydant (5) | 1.5 | 1.5 | 1.5 | 1.5 | 1.5 | 1.5 |
| Cire ozone | 1 | 1 | 1 | 1 | 1 | 1 |
| Acide stéarique | 2.5 | 2.5 | 2.5 | 2.5 | 2.5 | 2.5 |
| Oxyde de zinc (6) | 3 | 3 | 3 | 3 | 3 | 3 |
| Accélérateur (7) | 0.85 | 0.85 | 0.85 | 0.85 | 0.85 | 0.85 |

(suite)

|  | T1 | C1 | C2 | C3 | T2 | T3 |
|---|---|---|---|---|---|---|
| Soufre | 1.6 | 1.6 | 1.6 | 1.6 | 1.6 | 1.6 |
|  |  |  |  |  |  |  |
| Performance Perte de masse en % base 100 par rapport à T1 | 100 | 105 | 114 | 126 | 157 | 102 |
| Allongement rupture à 60°C en % base 100 par rapport à T1 | 100 | 91 | 82 | 80 | 59 | 85 |
| Tan delta max à 60°C | 0.19 | 0.18 | 0.18 | 0.17 | 0.17 | 0.17 |

(1) Caoutchouc naturel
(2) SBR solution fonctionnalisé étain avec 24 % de motifs polybutadiène 1,2 - 15.5 % de motifs styrène - Tg = -65°C
(3) Polybutadiène néodyme 98% 1,4 cis - Tg = -108°C
(4) Noir de carbone de grade N234 selon la norme ASTM D-1765
(5) N-1,3-diméthylbutyl-N-phénylparaphénylènediamine « Santoflex 6-PPD » de la société Flexsys
(6) Oxyde de zinc de grade industriel de la société Umicore
(7) N-cyclohexyl-2-benzothiazyle sulfénamide « Santocure CBS » de la société Flexsys

Les résultats présentés dans le tableau 1 ci-dessus montrent que la performance perte de masse, représentative d'une meilleure résistance à l'usure lors de la phase d'atterrissage, des compositions C1 à C3 est toujours significativement améliorée par rapport au témoin.

Par ailleurs, ces compositions C1 à C3 présentent un allongement rupture à 60° inférieur de 20% par rapport au témoin T1 (composition d'une bande de roulement pour avion conventionnellement utilisée par l'homme du métier pour fabriquer une bande de roulement de pneumatique avion) qui reste un niveau acceptable des propriétés mécaniques. Au-delà de 20% de baisse par rapport à T1, il peut être considéré que les propriétés mécaniques pourraient ne plus être considérée comme suffisantes pour que la composition de bande de roulement soit utilisée sur des pneumatiques d'avion.

Les résultats ci-dessus montrent également que la stabilité thermique de la composition, représentée par les valeurs de Tan delta max à 60°C, est maintenue, voire même améliorée, par rapport au témoin T1.

Comme le montrent les résultats de la composition T2, l'absence de caoutchouc naturel dans la composition engendre une forte baisse des propriétés mécaniques. En outre, la composition T3 correspondant à une composition de bande de roulement dans laquelle la moitié du caoutchouc naturel a été remplacé par un polybutadiène ne permet pas d'améliorer significativement la résistance à l'usure.

Ainsi, seules les compositions conformes à l'invention ont pour avantage de permettre une meilleure résistance à l'usure lors de la phase d'atterrissage de l'avion, tout en maintenant, voire améliorant les propriété thermique de la composition et en conservant les propriétés mécaniques à un niveau acceptable. On observe que l'utilisation de 45 à 75 pce de SBR étain dans la composition conduit à un meilleur compromis de performance entre la résistance à l'usure et le maintien des propriétés thermiques et mécaniques.

Exemple 2 :

Cet exemple a pour but de montrer l'influence de l'incorporation d'autres élastomères diéniques en plus du SBR fonctionnalisés étain en sur le compromis de performance entre la résistance à l'usure et la conservation des propriétés mécaniques et thermiques.

C2 correspond à la composition C2 de l'Exemple 1. Elle correspond à un mode de réalisation de l'invention dans lequel seul le SBR fonctionnalisé à l'étain est présent en plus de l'élastomère diénique.

Les essais C4 et C5 sont également conformes à l'invention. Les compositions C4 et C5 comprennent des élastomères synthétiques complémentaires de nature différente comme indiqué dans le tableau 2 ci-dessous.

Les résultats de performance de perte de masse et d'allongement rupture à 60°C sont exprimés en pourcentage base 100 par rapport à la composition témoin T1 de l'Exemple 1.

Tableau 2

|  | C2 | C4 | C5 |
|---|---|---|---|
| NR (1) | 50 | 35 | 30 |
| SBR (2) | 50 | 45 | - |

(suite)

|  | C2 | C4 | C5 |
|---|---|---|---|
| SBR (3) | - | - | 20 |
| BR (4) | - | 20 | - |
| VCR412 (5) | - | - | 50 |
| Noir de carbone (6) | 49 | 49 | 49 |
| Antioxydant (7) | 1.5 | 1.5 | 1.5 |
| Cire ozone | 1 | 1 | 1 |
| Acide stéarique | 2.5 | 2.5 | 2.5 |
| Oxyde de zinc (8) | 3 | 3 | 3 |
| Accélérateur (9) | 0.85 | 0.85 | 0.85 |
| Soufre | 1.6 | 1.6 | 1.6 |
|  |  |  |  |
| Performance Perte de masse en % base 100 par rapport à T1 | 114 | 118 | 138 |
| Allongement rupture à 60°C en % base 100 par rapport à T1 | 82 | 108 | 95 |
| Tan delta à 60°C | 0.18 | 0.18 | 0.20 |

(1) Caoutchouc naturel
(2) SBR solution fonctionnalisé étain avec 24 % de motifs polybutadiène 1,2 - 15.5 % de motifs styrène - Tg = -65°C
(3) SBR solution fonctionnalisé étain avec 24 % de motifs polybutadiène 1,2 - 26.5 % de motifs styrène - Tg = -48°C
(4) Polybutadiène néodyme 98% 1,4 cis - Tg = -108°C
(5) « VCR412 UBEPOL » de la société UBE - polybutadiène composite : 12% de polybutadiène 1,2 syndiotactique dans une matrice polybutadiène 1,4-cis.
(6) Noir de carbone de grade N234 selon la norme ASTM D-1765
(7) N-1,3-diméthylbutyl-N-phénylparaphénylènediamine « Santoflex 6-PPD » de la société Flexsys
(8) Oxyde de zinc de grade industriel de la société Umicore
(9) N-cyclohexyl-2-benzothiazyle sulfénamide « Santocure CBS » de la société Flexsys

Les résultats présentés dans le tableau 2 ci-dessus montrent que la performance perte de masse, représentative d'une meilleure résistance à l'usure lors de la phase d'atterrissage, des compositions C4 et C5 est toujours significativement améliorée par rapport au témoin T1, et sont comparables, voire supérieurs à la composition C2 conforme à la présente invention.

Par ailleurs, ces compositions présentent un allongement rupture à 60° bien inférieur à 20%, voire supérieure, par rapport au témoin T1, et la stabilité thermique de la composition est également maintenue par rapport au témoin T1. Ces résultats sont comparables, voire supérieurs à la composition C2 conforme à la présente invention.

Ainsi, les compositions conformes à l'invention, qu'elles comprennent ou non un autre élastomère diénique en plus de l'élastomère isoprénique et du SBR fonctionnalisé à l'étain, ont pour avantage de fournir une meilleure résistance à l'usure lors de la phase d'atterrissage de l'avion, tout en maintenant, voire améliorant les propriétés thermiques de la composition et en conservant de bonnes propriétés mécaniques.

## Revendications

1. Pneumatique d'avion dont la bande de roulement comprend une composition à base d'au moins une charge renforçante, un système de réticulation et d'une matrice élastomérique comprenant :

    - de 15 à 75 parties pour cent parties d'élastomère, pce, d'élastomère isoprénique, et
    - de 25 à 85 pce d'un copolymère butadiénique et styrénique fonctionnalisé à l'étain,
    le taux total d'élastomère isoprénique et de copolymère butadiénique et styrénique fonctionnalisé à l'étain étant compris dans un domaine allant de 45 à 100 pce,
    dans lequel la matrice élastomérique comprend de plus de 0 à 55 pce, d'un autre élastomère diénique, et

dans lequel le copolymère butadiénique et styrénique fonctionnalisé à l'étain est un copolymère butadiénique et styrénique fonctionnalisé à l'étain à faible taux de styrène, le taux de styrène étant compris dans un domaine allant de 10 à 19%.

2.  Pneumatique selon la revendication 1, dans lequel le taux d'élastomère isoprénique est compris dans un domaine allant de 20 à 65 pce, de préférence de 25 à 60 pce.

3.  Pneumatique selon la revendication 1 ou 2 dans lequel l'élastomère isoprénique est choisi dans le groupe comprenant le caoutchouc naturel, le polyisoprène synthétique et leur mélange.

4.  Pneumatique selon l'une quelconque des revendications 1 à 3, dans lequel le taux de copolymère butadiénique et styrénique fonctionnalisé à l'étain est compris dans un domaine allant de 35 à 80, de préférence de 40 à 75 pce.

5.  Pneumatique selon l'une quelconque des revendications 1 à 4, dans lequel la matrice élastomérique comprend de plus de 0 à 50 pce d'un autre élastomère diénique.

6.  Pneumatique selon la revendication 5, dans lequel l'autre élastomère diénique est choisi dans le groupe constitué par les copolymères butadiéniques et styréniques non-fonctionnalisés à l'étain, les polybutadiènes et leur mélange.

7.  Pneumatique selon la revendication 5 ou 6, dans lequel l'autre élastomère diénique comprend majoritairement un polybutadiène.

8.  Pneumatique selon la revendication 7, dans lequel le taux de l'autre élastomère diénique est compris dans un domaine allant de 10 à 30 pce, de préférence de 15 à 25 pce.

9.  Pneumatique selon la revendication 5 ou 6, dans lequel l'autre élastomère diénique comprend majoritairement un polybutadiène composite, lequel comprend de 5 à 25% de polybutadiène 1,2 syndiotactique dans une matrice de polybutadiène cis-1,4.

10. Pneumatique selon la revendication 9, dans lequel le taux de l'autre élastomère diénique est compris dans un domaine allant de 10 à 55 pce, de préférence de 40 à 55 pce.

11. Pneumatique selon l'une quelconque des revendications 1 à 10, dans lequel la charge renforçante comprend du noir de carbone et/ou une charge inorganique renforçante, la charge renforçante comprenant majoritairement du noir du carbone.

12. Pneumatique selon l'une quelconque des revendications 1 à 11, dans lequel le nombre de couches carcasse va de 2 à 12, de préférence de 5 à 10.

13. Pneumatique selon l'une quelconque des revendications 1 à 12, dont la dimension est supérieure ou égale à 18 pouces, de préférence de 20 à 23 pouces.

14. Utilisation d'une composition telle que définie dans l'une quelconque des revendications 1 à 11, dans une bande de roulement de pneumatique d'avion pour améliorer la résistance à l'usure engendrée lors des atterrissages dudit pneumatique.

**Patentansprüche**

1.  Flugzeugreifen, dessen Laufstreifen eine Zusammensetzung auf Basis mindestens eines verstärkenden Füllstoffs, ein Vernetzungssystem und eine Elastomermatrix umfasst, umfassend:

    - 15 bis 75 Teile auf hundert Teile Elastomer, phe, Isoprenelastomer und
    - 25 bis 85 phe eines mit Zinn funktionalisierten Butadien-Styrol-Copolymers,
    wobei der Gesamtgehalt an Isoprenelastomer und mit Zinn funktionalisiertem Butadien-Styrol-Copolymer in einem Bereich von 45 bis 100 phe liegt,
    bei dem die Elastomermatrix zudem 0 bis 55 phe eines anderen Dienelastomers umfasst und
    bei dem das mit Zinn funktionalisierte Butadien-Styrol-Copolymer ein mit Zinn funktionalisiertes Butadien-Styrol-Copolymer mit geringem Styrolgehalt ist, wobei der Styrolgehalt in einem Bereich von 10 bis 19 % liegt.

2. Reifen nach Anspruch 1, bei dem der Isoprenelastomergehalt in einem Bereich von 20 bis 65 phe, bevorzugt von 25 bis 60 phe liegt.

3. Reifen nach Anspruch 1 oder 2, bei dem das Isoprenelastomer aus der Gruppe gewählt ist, die den Naturkautschuk, das synthetische Polyisopren und ihre Mischung umfasst.

4. Reifen nach einem der Ansprüche 1 bis 3, bei dem der Gehalt an mit Zinn funktionalisiertem Butadien-Styrol-Copolymer in einem Bereich von 35 bis 80, bevorzugt von 40 bis 75 phe liegt.

5. Reifen nach einem der Ansprüche 1 bis 4, bei dem die Elastomermatrix zudem 0 bis 50 phe eines anderen Dienelastomers umfasst.

6. Reifen nach Anspruch 5, bei dem das andere Dienelastomer aus der Gruppe gewählt ist, die aus den nicht mit Zinn funktionalisierten Butadien-Styrol-Copolymeren, den Polybutadienen und ihrer Mischung gebildet wird.

7. Reifen nach Anspruch 5 oder 6, bei dem das andere Dienelastomer mehrheitlich ein Polybutadien umfasst.

8. Reifen nach Anspruch 7, bei dem der Gehalt des anderen Dienelastomers in einem Bereich von 10 bis 30 phe, bevorzugt von 15 bis 25 phe liegt.

9. Reifen nach Anspruch 5 oder 6, bei dem das andere Dienelastomer mehrheitlich ein Verbundpolybutadien umfasst, das 5 bis 25 % syndiotaktisches 1,2-Polybutadien in einer cis-1,4-Polybutadien-Matrix umfasst.

10. Reifen nach Anspruch 9, bei dem der Gehalt des anderen Dienelastomers in einem Bereich von 10 bis 55 phe, bevorzugt von 40 bis 55 phe liegt.

11. Reifen nach einem der Ansprüche 1 bis 10, bei dem der verstärkende Füllstoff Ruß und/oder einen verstärkenden anorganischen Füllstoff umfasst, wobei der verstärkende Füllstoff mehrheitlich Ruß umfasst.

12. Reifen nach einem der Ansprüche 1 bis 11, bei dem die Anzahl der Karkassenlagen 2 bis 12, bevorzugt 5 bis 10 beträgt.

13. Reifen nach einem der Ansprüche 1 bis 12, dessen Größe 18 Zoll oder mehr, bevorzugt 20 bis 23 Zoll beträgt.

14. Verwendung einer Zusammensetzung wie in einem der Ansprüche 1 bis 11 definiert in einem Flugzeugreifenlaufstreifen zum Verbessern der Beständigkeit gegen den bei Landungen verursachten Verschleiß des Reifens.

**Claims**

1. Aircraft tyre, the tread of which comprises a composition based on at least one reinforcing filler, a crosslinking system and an elastomeric matrix, comprising:

   - from 15 to 75 parts, per hundred parts of elastomer, phr, of isoprene elastomer, and
   - from 25 to 85 phr of a tin-functionalized butadiene and styrene copolymer,
   the total content of isoprene elastomer and of tin-functionalized butadiene and styrene copolymer being within a range extending from 45 to 100 phr,
   wherein the elastomeric matrix comprises from more than 0 to 55 phr of another dienic elastomer,
   wherein the tin-functionalized butadiene and styrene copolymer is a tin-functionalized butadiene and styrene copolymer comprising a low styrene content, the styrene content being within a range extending from 10 to 19%.

2. Tyre according to Claim 1, wherein the content of isoprene elastomer is within a range extending from 20 to 65 phr, preferably from 25 to 60 phr.

3. Tyre according to Claim 1 or 2, wherein the isoprene elastomer is selected from the group consisting of natural rubber, synthetic polyisoprene and their mixture.

4. Tyre according to any one of Claims 1 to 3, wherein the content of tin-functionalized butadiene and styrene copolymer is within a range extending from 35 to 80 phr, preferably from 40 to 75 phr.

5. Tyre according to any one of Claims 1 to 4, wherein the elastomeric matrix comprises from more than 0 to 50 phr, of another diene elastomer.

6. Tyre according to Claim 5, wherein the other diene elastomer is selected from the group consisting of butadiene and styrene copolymers which are not functionalized with tin, polybutadienes and their mixture.

7. Tyre according to Claim 5 or 6, wherein the other diene elastomer predominantly comprises a polybutadiene.

8. Tyre according to Claim 7, wherein the content of the other diene elastomer is within a range extending from 10 to 30 phr, preferably from 15 to 25 phr.

9. Tyre according to Claim 5 or 6, wherein the other diene elastomer predominantly comprises a composite polybutadiene, which comprises from 5% to 25% of syndiotactic 1,2-polybutadiene in a cis-1,4-polybutadiene matrix.

10. Tyre according to Claim 9, wherein the content of the other diene elastomer is within a range extending from 10 to 55 phr, preferably from 40 to 55 phr.

11. Tyre according to any one of Claims 1 to 10, wherein the reinforcing filler comprises carbon black and/or a reinforcing inorganic filler, the reinforcing filler predominantly comprises carbon black.

12. Tyre according to any one of Claims 1 to 11, wherein the number of carcass layers ranges from 2 to 12, preferably from 5 to 10.

13. Tyre according to any one of Claims 1 to 12, the size of which is greater than or equal to 18 inches, preferably from 20 to 23 inches.

14. Use of a composition as defined in any one of Claims 1 to 11 in an aircraft tyre tread for improving the resistance of the said tyre to the wear generated during landings.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004256611 B
- WO 2011042507 A

- US 3393182 A

**Littérature non-brevet citée dans la description**

- Touchdown dynamics v,. **S. K. CLARK.** Computational Modeling of Tires. Précision Measurement Company, Ann Arbor, MI, NASA, Langley Research Center,, 1995, 9-19

- Touchdown dynamics v. **S. K. CLARK.** Computational Modeling of Tires. Précision Measurement Company, Ann Arbor, MI, NASA, 35 Langley Research Center, 1995, 9-19